Europäisches Patentamt

European Patent Office

Office européen des brevets

(11) Veröffentlichungsnummer: **0 151 550**
A1

## (12) EUROPÄISCHE PATENTANMELDUNG

(21) Anmeldenummer: 85810004.3

(22) Anmeldetag: 10.01.85

(51) Int. Cl.⁴: **B 62 D 27/00**

(30) Priorität: 11.01.84 CH 136/84

(43) Veröffentlichungstag der Anmeldung:
14.08.85 Patentblatt 85/33

(84) Benannte Vertragsstaaten:
AT BE CH DE FR GB IT LI LU NL SE

(71) Anmelder: Carrosserie Hess AG
Bielstrasse 7
CH-4512 Bellach(CH)

(72) Erfinder: Kofmel, Urs
Wilstrasse 67
CH-4511 Horriwil(CH)

(74) Vertreter: Kerr, Andrew
Postfach 122 Finkelerweg 44
CH-4144 Arlesheim BL(CH)

(54) **Aus Profilteilen zusammengesetzte Flächen für Fahrzeuge.**

(57) Bei einem Wagenkasten, insbesondere für Strassen-
oder Schienenfahrzeuge, mit aus Profilen (2, 3 bzw. 20, 21)
bzw. Profilteilen (26) zusammengesetzten Seiten- und Stirnwänden, Boden und ggf. einer Dachhaut, sind die Profile (2, 3
bzw. 20, 21) bzw. die Profilteile (26) mit Profilen (27) durch
Schraubverbindungen (S) aneinander gekoppelt.

Hierzu weisen die Profile (3, 21, 27) an der Stelle des
Zusammenbaus mit anderen Profilen (2, 20) bzw. Profilteilen
(26) eine durch eine Rinne (6) zugängliche hinterschnittene
Nut (8) auf, in welche ein Klemmstück (10) einsetzbar ist,
welches eine Bohrung (14) zur Aufnahme eines Schraubenbolzens vorsieht, der eine Profilwand (22) bzw. eine Befestigungsfahne (4, 23) eines anderen Profils (2, 20) oder das
Profilteil (26) selbst durchsetzt.

FIG.1

Croydon Printing Company Ltd.

0151550

Wagenkasten, insbesondere für Strassen- oder Schienenfahrzeuge

Die Erfindung betrifft einen Wagenkasten, insbesondere für Strassen- oder Schienenfahrzeuge, mit aus Profilen bzw. Profilteilen zusammengesetzten Seiten- und Stirnwänden, Boden und ggf. einer Dachhaut.

Beispielsweise aus der DE-OS 27 51 753 ist ein Eckverbindungsstück für Profilstäbe von Wagenkästen bekannt, welches eine Schraubverbindung mit einem von einem Schraubbolzen durchsetzten parallelogrammartigen Klemmstück aufweist.

Eine Verbesserung dieses Klemmstücks geht aus der deutschen Gebrauchsmusteranmeldung G 83 26 978 hervor.

In vermehrtem Umfang werden heute aber auch ganze Seitenwände, Stirnwände, Bodenteile und die Dachhaut aus einzelnen Profilen hergestellt und zudem mit Profilteilen für bestimmte Funktionen belegt. Bislang wurden diese Profile bzw. Profilteile in der Regel zusammengeschweisst oder geklebt, was beispielsweise ein Auswechseln bei Beschädigungen sehr erschwert.

Der Erfinder hat sich zum Ziel gesetzt, den Zusammenbau eines Wagenkastens aus einer Vielzahl von Profilen zu erleichtern und ein Auswechseln einzelner Profilteil zu ermöglichen.

Zur Lösung dieser Aufgabe führt, dass die Profile bzw. die Profilteile mit Profilen durch Schraubverbindungen aneinander gekoppelt sind.

Bevorzugt soll dabei eine Schraubverbindung Anwendung finden, wie sie aus der vorher genannten DE-OS 27 51 753 bzw. der deutschen Gebrauchsmusteranmeldung G 83 26 978 bekannt ist. Hierzu sollen die Profile an der Stelle des Zusammenbaus mit anderen Profilen bzw. Profilteilen eine durch eine Rinne von aussen zugängliche hinterschnittene Nut aufweisen, in welche ein Klemmstück einsetzbar ist, welches eine Bohrung zur Aufnahme eines Schraubenbolzens vorsieht, der eine Profilwand bzw. eine Befestigungsfahne eines anderen Profils oder das Profilteil selbst durchsetzt. Auf diese Weise ist es sehr einfach, entsprechende Profile beispielsweise einer Seitenwand zusammenzusetzen aber auch wieder zu lösen.

Das Klemmstück hat die Form eines Parallelogramms, dessen Breite kleiner ist als die lichte Weite der Rinne und welches abgekröpfte Bereiche aufweist, die in Einbaulage den Hinterschneidungen der Nut formschlüssig anliegen. Beim Zusammenbau kann somit das Klemmstück durch die Rinne in die Nut eingeführt werden. Wird danach der Schraubenbolzen gedreht, schwenkt das Klemmstück unter die Hinterschneidungen in der Nut ein und verkeilt sich an den Seitenwänden der Nut infolge seiner parallelogrammartigen Form. Beim weiteren Anziehen des Schraubenbolzens werden die einzelnen Profile bzw. Profilteile zueinander hingezogen und festgelegt.

Zum besseren Zentrieren der einzelnen Profilteile bzw. Profile zueinander weist die Profilwand bzw. das Profilteil bzw. die Befestigungsfahne Vorsprünge auf, welche in Einbaulage geneigten Rinnenwänden formschlüssig anliegen. Hierdurch wird gleichzeitig einen Keilwirkung zwischen Vorsprung und Rinnenwänden erzeugt.

Dort wo es notwendig erscheint, sind den Befestigungsfahnen bzw. den Profilteilen Vertiefungen eingeformt, welche der Aufnahme von Köpfen des Schraubenbolzens dienen. Damit können sich diese Köpfe nicht mehr störend auswirken.

Eine derart ausgestaltete Schraubverbindung soll erfindungsgemäss für alle Teile eines Wagenkastens verwendbar sein. Hierdurch wird der Zusammenbau eines gesamten Wagenkastens in erheblichem Masse erleichtert.

Weitere Vorteile, Merkmale und Einzelheiten der Erfindung ergeben sich aus der nachfolgen Beschreibung bevorzugter Ausführungsbeispiele sowie anhand der Zeichnung; diese zeigt in

Fig. 1     einen vertikalen Querschnitt eines Ausschnitts aus einer Seitenwand eines Wagenkastens;

Fig. 2     einen vergrösserten vertikalen Querschnitt eines Ausschnitts im Bereich einer Verbindungsstelle zwischen Seitenwand und einem Untergurt;

Fig. 3    einen  horizontalen  Querschnitt  eines  Ausschnitts im Bereich eines Türpfostens;

Fig. 4    eine Draufsicht und einen Querschnitt eines
          Klemmstücks.

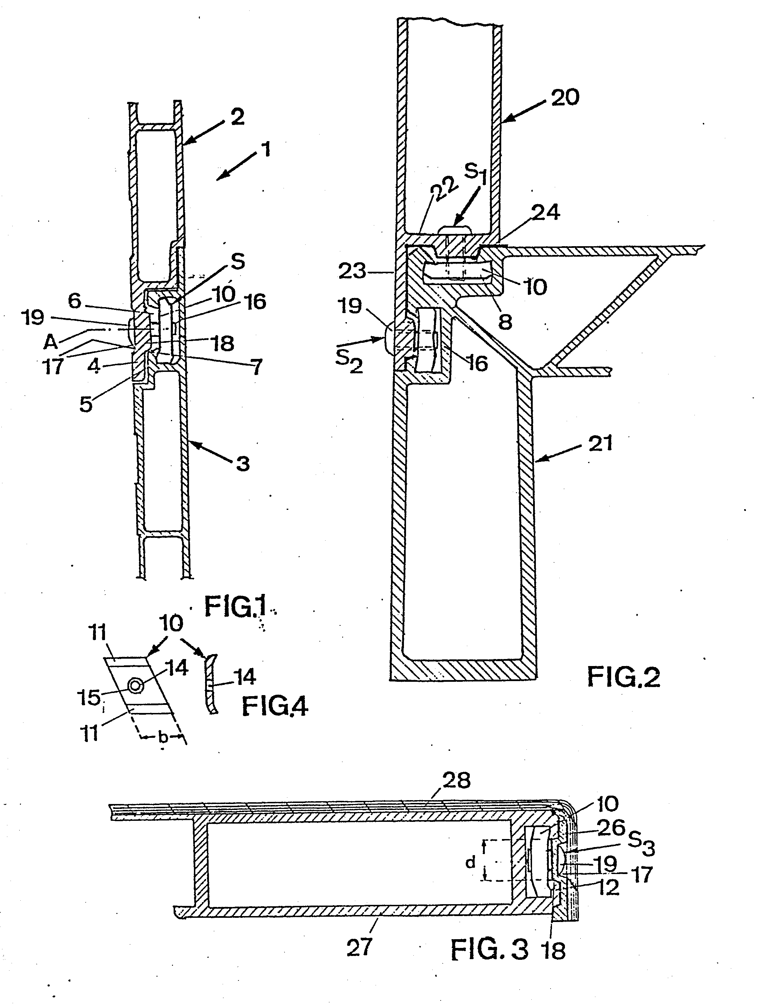

Eine Seitenwand 1 eines nicht näher dargestellten Wagenkastens besteht aus vorzugsweise stranggepressten Hohlprofilen aus Aluminium. Je zwei Hohlprofile 2 und 3 sind durch
eine Schraubverbindung S aneinander angekoppelt, wobei ein
Hohlprofil 2 mit einer Befestigungsfahne 4 in eine entsprechende Ecksicke 5 des anderen Hohlprofils 3 eingreift. In
dieser Ecksicke 5 weist das Hohlprofil 3 eine Rinne 6 auf,
deren Rinnenwände 7 zur Rinnenachse A hin abgeschrägt
sind. Die Rinne 6 gibt den Zugang zu einer hinterschnittenen Nut 8 frei, in welche beim Zusammenbau des Wagenkastens
ein parallelogrammartiges Klemmstück eingeschwenkt wird,
das in Fig. 4 näher gezeigt ist. Seine Breite b ist dabei
kleiner als die lichte Weite d der Rinne 6 (Fig. 3) es
weist jeweils randseitig einen gekröpften Bereich 11, welcher sich den Hinterschneidungen 12 der Nut 8 anlegt, und
mittig eine Bohrung 14 mit Gewindezahnung 15 auf, in die
ein Schraubenbolzen 16 eingedreht werden kann. Dieser
Schraubenbolzen 16 liegt mit seinem Kopf 19 in einer Vertiefung 17 in der Aussenfläche der Befestigungsfahne 4,
durchsetzt diese und einen ihr angeformten Vorsprung 18,
dessen äussere Kontur dem Querschnitt der Rinne 6 angepasst
ist.

Figur 2 zeigt zwei Schraubverbindungen S1 und S2 für die
Festlegung eines Seitenwandprofils 20 an einem Untergurt
21, bestehend ebenfalls aus Profilwänden 22 bzw. Befestigungsfahnen 23 durchsetzende Schraubenbolzen 16, welche ein in einer hinterschnittenen Nut 8 eingeschwenktes Klemmstück 10 anziehen. Hierbei ruhen die Köpfe 19 der Schraubenbolzen 16 jedoch nicht in Vertiefungen. Zwischen das Seitenwandprofil 20 und den Untergurt 21 ist eine Isolationsstreifen 24 eingelegt.

Figur 3 zeigt eine weitere Schraubverbindung S3 zur Festlegung eines Türrahmens 26 an einem Türpfosten 27. Hierbei ist der Kopf 19 des Schraubenbolzens wiederum in einer Vertiefung 17 versenkt, welche jedoch durch Einprägung od. dgl. entstanden ist, so dass sie dem Negativ des Vorsprungs 18 entspricht. Sowohl Türpfosten 27 wie auch Türrahmen 26 sind von einer Innenverkleidung 28 belegt, welche -- nicht dargestellte -- Montageöffnungen zum Anziehen des Schraubenbolzens aufweist.

PATENTANSPRÜCHE

_____

1. Wagenkasten,      insbesondere für Strassen- oder Schienenfahrzeuge, mit aus Profilen bzw. Profilteilen zusammengesetzten Seiten- und Stirnwänden, Boden und ggf. einer Dachhaut, dadurch gekennzeichnet,

dass die Profile (2, 3 bzw. 20, 21) bzw. die Profilteile (26) mit Profilen (27) durch Schraubverbindungen (S) aneinander gekoppelt sind.

2. Wagenkasten   nach Anspruch 1, dadurch gekennzeichnet, dass Profile (3, 21, 27) an der Stelle des Zusammenbaus mit anderen Profilen (2, 20) bzw. Profilteilen (26) eine durch eine Rinne (6) zugängliche hinterschnittene Nut (8) aufweisen, in welche ein Klemmstück (10) einsetzbar ist, welches eine Bohrung (14) zur Aufnahme eines Schraubenbolzens vorsieht, der eine Profilwand (22) bzw. eine Befestigungsfahne (4, 23) eines anderen Profils (2, 20) oder das Profilteil (26) selbst durchsetzt.

3. Wagenkasten   nach Anspruch 2, dadurch gekennzeichnet, dass das Klemmstück (10) die Form eines Parallelogramms hat, dessen Breite (b) kleiner ist als die lichte Weite der Rinne (d) und welches abgekröpfte Bereiche (11) aufweist, die in Einbaulage den Hinterschneidungen (12) der Nut (8) formschlüssig anliegen.

4. Wagenkasten nach Anspruch 2 oder 3, dadurch gekennzeichnet, dass die Profilwand (22) bzw. das Profilteil (26) bzw. die Befestigungsfahne (4, 23) Vorsprünge (18) aufweist, welche in Einbaulage geneigten Rillenwänden (7) formschlüssig anliegen.

5. Wagenkasten nach einem der Ansprüche 2 bis 4, dadurch gekennzeichnet, dass den Befestigungsfahnen (4) bzw. den Profilteilen (26) Vertiefungen (17) eingeformt sind, welche der Aufnahme von Köpfen (19) des Schraubenbolzens (16) dienen.

6. Wagenkasten nach wenigstens einem der Ansprüche 1 bis 5, dadurch gekennzeichnet, dass zwischen Profilen (2, 3 bzw. 20, 21) bzw. Profilteilen (26) und Profilen (27) ein Isolationsstreifen (24) eingelegt ist.

0151550

FIG.1

FIG.2

FIG.4

FIG. 3

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DD-A- 38 182 (BRAGULLA) <br> * Figur 3 * | 1,2 | B 62 D 27/00 |
| | --- | | |
| D,A | DE-U-8 326 978 (SCHWEIZERISCHE ALUMINIUM AG) <br> * Ansprüche 1-3; Figuren 2,3,5-9 * | 1-5 | |
| | --- | | |
| D,A | DE-A-2 751 753 (SCHWEIZERISCHE ALUMINIUM AG) <br> * Seite 9, Zeile 18 - Seite 10, Zeile 6; Figuren 9,11 * | 1-3 | |
| | --- | | |
| A | DE-U-1 695 451 (DEUTSCHE BUNDESBAHN) <br> * Figuren 1,2 * | 1,6 | |
| | ----- | | |

**RECHERCHIERTE SACHGEBIETE (Int. Cl.4)**

B 62 D 27/00

Der vorliegende Recherchenbericht wurde für alle Patentansprüche erstellt.

| Recherchenort | Abschlußdatum der Recherche | Prüfer |
|---|---|---|
| BERLIN | 11-04-1985 | LUDWIG H J |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82